# EUROPEAN PATENT APPLICATION

(11) **EP 0 923 201 A1**
(43) Date of publication of application: **16.06.1999**
(21) Application number: 97830665.2
(22) Date of filing: 12.12.1997
(51) Int. Cl.: H04B 7/00

(54) **Telephone set in particular cordless or dect provided with alarm signaller**

(71) Applicant: Telital S.p.A., 34010 Sgonico (Trieste) (IT)
(72) Inventor: Fragiacomo, Mario, 34100 Trieste (IT)
(74) Representative: Sutto, Luca

(57) **Abstract**

A telephone set of the cordless or dect type provided with an alarm signaller in which a fixed base (2) of the telephone set connected to the telephone system holds a pair of combinational logic systems (9a, 9b) receiving as inputs the telephone signal, a priority alarm signal and a possible danger-detecting signal from a sensor (11). Each combinational system is capable of alternately outputting the priority alarm signal or the telephone signal to be then sent via radio to a movable receiver (4) being part of the telephone set itself or to audio signalling means (28) associated with the fixed base (2).

## Description

The present invention relates to a telephone set, in particular of the cordless or dect type, provided with an alarm signaller.

It is known that common danger-signalling systems for home use generally consist of a predetermined number of remote units each incorporating sensors capable of detecting situations of possible danger within the environment surrounding them, which are due either to escapes of toxic gases or explosives for example, or to the presence of smoke or too much heat.

Each sensor in the remote units is then connected by the usual mains, by means of conveyed waves for example, to a central unit capable of receiving signals therefrom and processing them so as to emit both visual and acoustic warnings in case of danger.

It is also known that connection between the remote units and central unit can also take place by communication through common radio waves.

The alarm signalling systems of the above described type however have some drawbacks.

First of all, each of the system components (remote units and central unit) for operation require a power supply of their own. This means that a great number of power outlets will be sometimes necessary for ensuring operation of the whole alarm system.

On the other hand, it is apparent that use of rechargeable storage batteries or normal batteries in a system of this type can be very dangerous in that a component incorporating an exhausted power supply is useless. This uselessness in the absence of an appropriate warning can also be fully and dangerously ignored, which will bring about obvious consequences.

Then, as regards the conveyed-wave alarm system it is to note that each component requires a connection to the mains and consequently, when both the sensors and the central signalling unit are connected to the mains, they are in a fixed position and can be moved only if disconnected from the alarm system.

In this case the possibility is not to be excluded that, due to the user's distance or the signaller's bad position, danger warnings may not take place.

On the other hand, a different alarm system communicating through radio waves requires a dedicated and independent transmission and reception circuitry which does not interfere with other frequencies and other transmission protocols of different electronic and/or electric apparatuses.

As a result, such a system, even if it is of the portable type, will involve a greater construction complexity and will be characterized by greater production costs as compared with a system of the fixed type.

Still with reference to the same technical field, also known are alarm systems comprising remote units housing danger-detecting sensors communicating through conveyed waves with a common telephone set.

In the case of a danger warning from sensors, a processing unit present in the telephone set carries out a call to a subscriber pre-established by the user informing him/her about the situation.

An alarm system thus conceived has some drawbacks too.

Firstly, the call can not be received either due to the subscriber's absence, or because the line is off-hook as another call is taking place or also because lines are overcrowded or the telephone service is temporarily interrupted.

In addition, even if the call should be immediately received, the subscriber's great distance from the place from which the danger message comes or the lack of timeliness in the intervention due to the most varied reasons could make prevention of the accident impossible and only allow a partial limitation of damages.

Under this situation, the technical task underlying the present invention is to obviate the above mentioned drawbacks.

Another important object of the invention is to conceive a telephone set incorporating an alarm system utilising the power supply and the reception and transmission circuitry thereof.

Another object of the invention is to enable sending of an alarm signal to the movable receiver of a telephone set of the cordless or dect type via a radio link so that a user who carries it and is in any other room in the house or even outside it can be reached.

The foregoing and further objects that will become more apparent in the course of the present description are substantially achieved by a telephone set, in particular of the cordless or dect type, provided with an alarm signaller as described in the appended claims.

Further features and advantages will be best understood from the detailed description of a preferred but non-exclusive embodiment of a telephone set of the cordless or dect type provided with an alarm signaller in accordance with the present invention. This description will be taken hereinafter with reference to the accompanying drawings, given by way of non-limiting example, in which:
- Fig. 1 is a block diagram of a telephone set incorporating an alarm signaller in accordance with the present invention;
- Fig. 2 is a diagram of a first embodiment of the device shown in Fig. 1;
- Fig. 3 is a block diagram of another embodiment of the device shown in fig. 1;
- fig. 4 is a block diagram of a combinational logic system being part of the device in accordance with the present invention.

With reference to the drawings, a telephone set of the cordless or dect type provided with an alarm signaller has been generally identified by reference numeral 1.

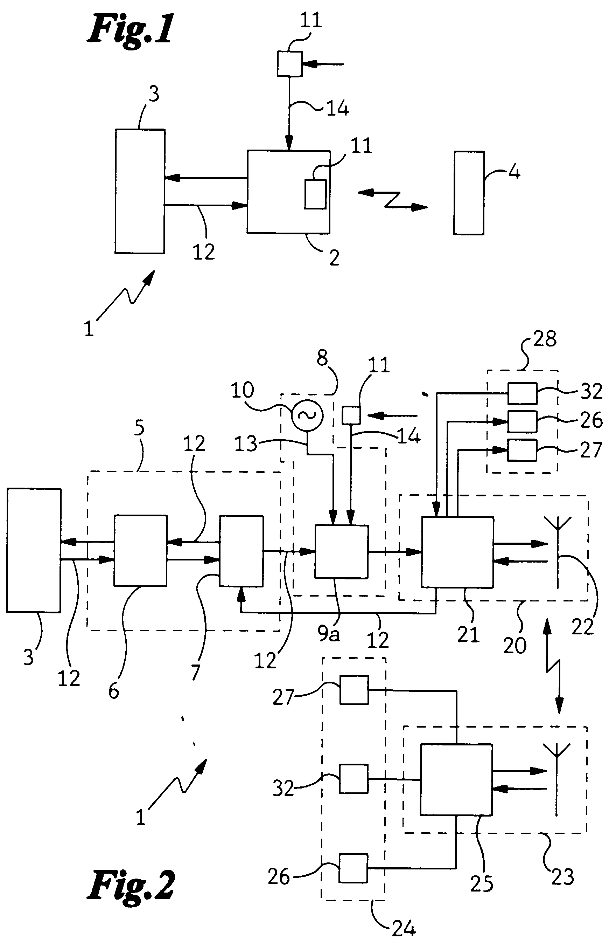

As can be viewed from Fig. 1, a telephone set in accordance with the present invention comprises a fixed base 2 operatively connected to the normal home telephone system 3 and a movable receiver 4 operatively connected via radio to the fixed base 2. Connections via radio employed in the present invention have specific techniques and protocols of known type and are commonly used in normal telephone sets commercially called "cordless" or in telephone sets of a more recent conception, called "dect".

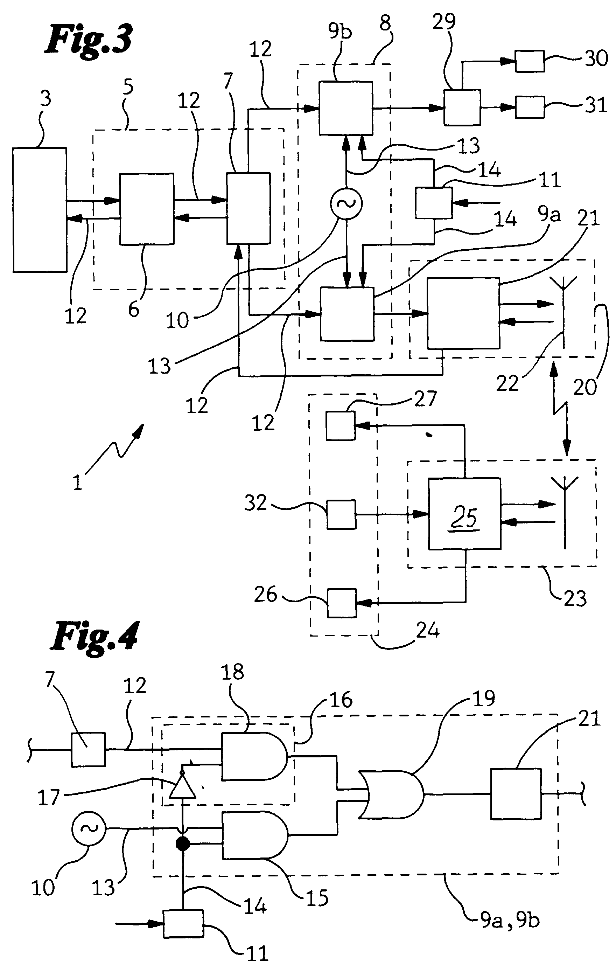

Inside the fixed base 2 (Figs. 2, 3) means 5 for detecting a telephone signal 12 from the telephone system is incorporated. This detector means 5 varies depending on the telephone pattern used, but generally it consists of an input interface 6 of the signal that, depending on requirements, is filtered, amplified, converted and subsequently sent to a processing unit 7 or CPU.

The telephone signal 12 outputted from CPU 7 is sent to priority-selecting means 8; in more detail, the telephone signal 12 constitutes an input for the combinational logic system 9a being part of said priority-selecting means 8.

A second input of the combinational system 9a comes from an alarm generator 10 being part of the selecting means 8 as well. Practically, generator 10 by advantageously utilizing the telephone power supply, outputs a particular alarm signal 13 which is sent to the combinational system 9a.

The combinational system 9a then has a third input for a danger-detecting signal 14 from at least one sensor 11 capable of detecting alarm conditions existing in the surrounding environment. Sensor 11 will be able to detect the presence of dangerous gases for example, which are toxic or explosive or to signal a possible fire by ascertaining the presence of too much heat or smoke.

Alternatively, it may be arranged so as to signal opening of doors or windows in order to draw attention to a possible burglary.

In general, signal 14 sent from sensor 11 will be of different nature depending on the detected environmental conditions; preferably it will be null in case of normal values of the parameters measured by sensors (temperature, pressure, brightness, etc.) and will take some value (in voltage, for example) should a danger situation be detected, thereby transmitting the danger-detecting signal 14 to the combinational system 9a.

Sensors 11 that are capable of sending the specified signal can obviously be more than one and can be positioned at different places, should this be deemed more appropriate.

Advantageously, one or more sensors 11 can be incorporated into the fixed base 2 and directly connected to the combinational logic system 9a. In this case the environment surrounding the fixed receiver 2 will be monitored. Alternatively, sensor 11 can be located externally of the fixed base 2 and operatively connected thereto to send the danger-detecting signal 14.

A direct connection via cable or via radio waves or, alternatively, a connection through conveyed waves can be for example provided.

The task of the combinational logic system 9a is of outputting the priority alarm signal 13 or, alternatively, the telephone signal 12, depending on the value of the danger-detecting signal 14.

The aim to be reached is to output the priority alarm signal 13 each time sensor 11 detects a possible danger situation. This means that each time the danger-detecting signal 14 occurs, even if it is present simultaneously with the telephone signal 12, the output from the combinational system 12 will be the alarm signal 13.

In a preferred embodiment (see Fig. 4) the combinational system 9a involves a first logic block 15 receiving as inputs the priority alarm signal 13 from generator 10 and the danger-detecting signal 14 from sensor 11.

The output of the first logic block 15 will be the priority alarm signal 13 each time the danger-detecting signal 14 occurs, and will be a zero-value signal in the absence of this danger-detecting signal 14.

Practically, the first logic block 15 behaves like a switch, controlled by the sensor, on the line where there is the priority alarm signal 13.

Each time sensor 11 sends the danger-detecting signal 14, the switch closes, letting the alarm signal 13 pass. When the danger signal is not sent any longer, the switch comes back to the open position.

The combinational system 9a also involves a second logic block 16 receiving as inputs the telephone signal 12 and the possible danger-detecting signal 14.

The output of the second logic block 16 will be the telephone signal 12, should the danger-detecting signal 14 be absent at the input; it will be a zero-value signal in the presence of the danger signal 14.

In more detail, this second logic block 16 will consist of at least two components: a signal-reversing element 17 and a logic element 18.

The signal-reversing element 17 receives as an input the signal from sensor 11 and outputs the zero-value signal in the presence of the danger-detecting signal 14 at the input, or it outputs the danger-detecting signal 14 when the input is zero.

The logic element 18 receives as an input the telephone signal 12 and also the output signal of the signal-reversing element 17. This logic element 18 is capable of outputting the telephone signal 12 in the presence of the danger-detecting signal 14 at the input, or a zero-value signal in the absence of the danger-detecting signal 14.

It will be easily recognized that the first logic block 15 and the logic element 18 may consist of very similar, if not identical, electronic components, which operate on the signals exactly in the same manner.

The combinational system 9a then involves a third logic block 19 receiving as inputs the two output signals of the first block 15 and the second logic block 18.

Due to the particular operation of the electronic components, as above specified, these two input lines will never be capable of both carrying one signal; at least one of them will be a zero-value signal. The task of the third logic block 19 is to output the received signal of non-zero value unchanged, i.e. either the priority alarm signal 13 or the telephone signal 12.

It is also to note that in an alternative embodiment the sensor may be provided to send a signal, a voltage signal for example, continuously, stopping it only under danger conditions.

If operation is conceived in this manner, the sensor signal would be also stopped when there is a sensor failure, malfunction of said sensor being communicated.

It is apparent that a sensor failure, if ignored, could be dangerous since under this condition possible alarm situations could not be detected.

In this case, using the same logic system, the same operation as that of the priority-selecting means could be obtained by merely exchanging the inputs of the telephone signal and priority alarm signal with each other.

The output signal of the combinational system is sent to common transmitting means 20, known per se and generally consisting of an interface 21 and an antenna 22, to be sent via radio to the movable receiver 4 of the telephone set.

The movable receiver 4 internally comprises receiving means 23 to interpret the signal received from the fixed base 2 and transmit it to signalling means 24 operatively connected to the preceding means.

The receiving means 23 comprises an interface 25 to send the received signal to the signalling means 24 and more specifically to an acoustic transmitter 26 capable of transmitting both the normal telephone signal 12, and consequently telephone rings and voice signals, and the possible alarm signal 13.

The signalling means further comprises a microphone 32 for normal telephone use of the movable receiver 4.

A luminous signal 17, such as a LED for example, may be also provided and it is controlled by the alarm signal 13 through the interface 25 to transmit previously established luminous danger warnings.

Advantageously, the fixed base 2 can be provided with further signalling means 28 (see Fig. 2), quite similar to that previously described and receiving as an input the signal from the priority-selecting means 8.

In a further embodiment (Fig. 3) the processing unit 7 sends a call-presence signal to a further combinational system 9b of the previously described type which in turn sends it to an interface 29 connected to both a visual signaller 30 and a bell 31.

The same processing unit 7 then sends a different signal containing voice information to another combinational logic system 9a similar to the preceding ones.

Then the output signal of the combinational system 9a is sent to transmission means 20 and finally to the movable receiver 4.

Advantageously, both the alarm generator 20 and sensor 11 supply the inputs of both combinational systems 9a, 9b, so that doubling of the circuit is avoided.

In addition, the two output lines from CPU 7 can be each provided with dedicated components. Practically one line, connected to bell 31, will be able to manage the incoming call signal and alarm signal only; on the contrary, the other line connected to the movable receiver 4 will manage the voice signal and alarm signal.

The invention achieves important advantages.

First of all a telephone set thus made enables both usual operation as a telephone and operation as a danger-signalling system

The invention enables signalling of an emergency situation from the sensor to the fixed base and from the latter to the movable receiver.

In this way the alarm signal can reach a user who is close to the receiver, even far away from the room where the danger conditions occur, from the fixed base of the telephone, and from the dwelling house.

In addition, the alarm signalling, being a priority over the telephone signal and being generated by components that do not utilize the telephone system for communicating, enables a danger to be signalled even if the telephone service does not work or if telephone calls are taking place, which will increase the system liability.

In addition, the invention enables the electronic components for power supply and transmission-reception via radio, currently already present in cordless telephones, also to be utilized for alarm signalling. In this way the telephone set being the object of the present invention achieves the intended aims by merely providing addition of a sensor and an alarm generator operatively connected with the signalling means through a combinational system consisting of simple and usual logic components, printed on an integrated card for example. For the above reasons, production costs too are reduced.

## Claims

1. A telephone set, in particular of the cordless or dect type, provided with an alarm signaller, comprising:
- at least one sensor (11) capable of detecting alarm conditions existing in a surrounding environment,
- a fixed base (2) operatively connected with the telephone system (3) and holding means (5) for detecting a telephone signal (12) from the system (3), priority-selecting means (8) operatively connected with the detecting means (5) for receiving as an input the telephone signal (12) and operatively connected with said at least one sensor (11) for receiving as an input a possible danger-detecting signal (14), said selecting means (8) being capable of alternately outputting a priority alarm signal (13) or a telephone signal (12), and transmitting means (20) for sending the output signal of the selecting means (18) via radio, and
- a movable receiver (4) operatively connected via radio to the fixed base (2) holding the receiving means (23) of the signal sent via radio by the transmitting means (20), and signalling means (24) operatively connected with the receiving means (23).

2. A telephone set as claimed in claim 1, characterized in that the priority-selecting means (8) comprises:
- an alarm generator (10),
- a combinational logic system (9a) receiving as inputs the priority alarm signal (13) from the alarm generator (10), the possible danger-detecting signal (14) and the telephone signal (12), said system alternately outputting the priority alarm signal or the telephone signal.

3. A telephone set as claimed in claim 2, characterized in that said combinational logic system (9a) comprises:
- a first logic block (15) receiving as inputs the priority alarm signal (13) and the possible danger-detecting signal (14), said first logic block (15) outputting the priority alarm signal in the presence of the danger-detecting signal at the input or a zero-value signal in the absence of the danger-detecting signal,
- a second logic block (16) receiving as inputs the telephone signal (12) and the possible danger-detecting signal (14), said second logic block (16) outputting the telephone signal in the absence of the danger-detecting signal at the input or a zero-value signal in the presence of the danger-detecting signal, and
- a third logic block (19) receiving as inputs the output signal of the first logic block and the output signal of the second logic block, said third logic block being capable of outputting the received signal of non-zero value among the signals from the output of the first and second logic blocks.

4. A telephone set as claimed in claim 3, characterized in that said second logic block (16) comprises a signal-reversing element (17) receiving as an input the danger-detecting signal (14) if present, said signal-reversing element (17) outputting a zero-value signal if the danger-detecting signal is present at the input or a danger-detecting signal if no signal is present at the input, and
- a logic element (18) receiving as inputs the telephone signal (12) and the output signal of the signal-reversing element, said logic element (18) outputting the telephone signal if the danger-detecting signal is present at the input, or a zero-value signal if the danger-detecting signal is absent.

5. A telephone set as claimed in claim 1, characterized in that said at least one sensor (11) is incorporated into the fixed base (2) to detect alarm conditions present in an environment surrounding said fixed base.

6. A telephone set as claimed in claim 2, characterized in that it comprises a further combinational logic system (9b) receiving as inputs the priority alarm signal (13) from the alarm generator (10), the possible danger-detecting signal (14), if any, and the telephone signal (12), said system (9b) alternately outputting the priority alarm signal or the telephone signal.

7. A telephone set as claimed in claim 6, characterized in that said combinational logic system (9b) comprises:
- a first logic block (15) receiving as inputs the priority alarm signal (13) and the possible danger-detecting signal (14), said first logic block (15) outputting the priority alarm signal in the presence of the danger-detecting signal at the input or a zero-value signal in the absence of the danger-detecting signal,
- a second logic block (16) receiving as inputs the telephone signal (12) and the possible danger-detecting signal (14), said second logic block (16) outputting the telephone signal in the absence of the gas-detecting signal at the input or a zero-value signal in the presence of the gas-detecting signal, and
- a third logic block (19) receiving as inputs the output signal of the first logic block and the output signal of the second logic block, said third logic block being capable of outputting the received signal of non-zero value among the signals from the output of the first and second logic blocks.

8. A telephone set as claimed in claim 7, characterized in that said second logic block (16) comprises a signal-reversing element (17) receiving as an input the possible danger-detecting signal (14), said signal-reversing element (17) outputting a zero-value signal in the presence of the danger-detecting signal at the input or a danger-detecting signal in the absence of a signal at the input, and
- a logic element (18) receiving as inputs the telephone signal (12) and the output signal of the signal-reversing element, said logic element (18) outputting the telephone signal in the presence of the danger-detecting signal at the input, or a zero-value signal in the absence of the danger-detecting signal.

9. A telephone set as claimed in claim 1, characterized in that it comprises further signaller means (29) held in the fixed base (2) and receiving as an input the signal from the priority-selecting means (8).
